# EUROPÄISCHE PATENTSCHRIFT

(11) **EP 0 841 386 B1**
(45) Veröffentlichungstag und Bekanntmachung des Hinweises auf die Patenterteilung: **19.02.2003**
(21) Anmeldenummer: 97203432.6
(22) Anmeldetag: 05.11.1997
(51) Int. Cl.: C09K 11/02, H01J 29/20

(54) **Leuchtstoffzubereitung mit fein- und grossteiligen SiO2-Partikeln**
Phosphor manufacturing with fine and coarse Si02 particles
Préparation de produit luminescent ayant des fines et grosses particules de Si02

(30) Priorität: 12.11.1996 DE 19646521
(43) Veröffentlichungstag der Anmeldung: 13.05.1998
(73) Patentinhaber: Philips Corporate Intellectual Property GmbH, 20099 Hamburg (DE); Koninklijke Philips Electronics N.V., 5621 BA Eindhoven (NL)
(72) Erfinder: Picht, Friederike, Dipl.-Ing., Röntgenstrasse 24, 22335 Hamburg (DE); Merikhi, Jacqueline, Röntgenstrasse 24, 22335 Hamburg (DE); Opitz, Joachim, Dr., Röntgenstrasse 24, 22335 Hamburg (DE); Jungk, Hans Otto, Röntgenstrasse 24, 22335 Hamburg (DE); de Bakker, Jan Willem G., Röntgenstrasse 24, 22335 Hamburg (DE); Boutelje, Miguel, Röntgenstrasse 24, 22335 Hamburg (DE); van Braam, Arlis G., Röntgenstrasse 24, 22335 Hamburg (DE); Vollebregt, Frans H.A., Drs., Röntgenstrasse 24, 22335 Hamburg (DE)
(74) Vertreter: Volmer, Georg, Dipl.-Ing.

(56) Entgegenhaltungen:
- EP-A- 0 106 967
- EP-A- 0 432 500
- DE-A- 2 944 943
- DE-A- 19 626 219

## Beschreibung

Die Erfindung betrifft einen Bildschirm, insbesondere einen Farbbildschirm für eine Kathodenstrahlröhre, mit einer Leuchtstoffschicht, die eine Leuchtstoffzubereitung aus einem Leuchtstoff mit einer Beschichtungsschicht mit einer oder mehreren Sauerstoffverbindungen der Elemente Zink, Aluminium, Magnesium, Calcium und Barium und kolloidalen SiO₂-Partikel enthält.

Die Erfindung betrifft auch eine Leuchtstoffzubereitung aus einem Leuchtstoff mit einer Beschichtungsschicht mit einer oder mehreren Sauerstoffverbindungen der Elemente Zink, Aluminium, Magnesium, Calcium und Barium und kolloidalen SiO₂-Partikeln.

Die Erfindung betrifft weiterhin ein Verfahren zur Herstellung einer Leuchtstoffzubereitung aus einem Leuchtstoff mit einer Beschichtungsschicht mit einer oder mehreren Sauerstoffverbindungen der Elemente Zink, Aluminium, Magnesium, Calcium und Barium und kolloidalen SiO₂-Partikeln.

Bildschirme von Kathodenstrahlröhren enthalten auf der Innenseite strukturierte Leuchtstoffschichten, die punkt- oder streifenförmige Muster aufweisen. Im Falle von Farbbildröhren ist jedes Leuchtstoffelement der Leuchtstoffschicht aus einem Tripel von Leuchtstoffelementen der drei Grundemissionsfarben Grün, Blau und Rot zusammengesetzt. Diese strukturierte Leuchtstoffschicht wird normalerweise in einem photochemischen Verfahren auf dem Schirmglas aufgebracht, wobei in der naßchemischen Variante Leuchtstoffsuspensionen und in der trockenen Variante Leuchtstofflacke verwendet werden. In dem naßchemischen Prozeß zur Beschichtung von Schirmglas mit Leuchtstoffen werden wäßrige Leuchtstoffsuspensionen eingesetzt, die z.B. Polyvinylalkohol (PVA) als Binder und Ammoniumdichromat (ADC) als lichtempfindliche Komponente enthalten.

Anforderungen an Leuchtstoffschichten, die auf Bildschirmen mit dem auf dem System PVA/ADC basierenden "Flowcoat"- Verfahren hergestellt werden, sind folgende: hohe Packungsdichte des Leuchtstoffmaterials in der Leuchtstoffschicht für eine optimale Schirmhelligkeit, gute Homogenität der Leuchtstoffschicht, d.h. Vermeidung von Strukturen aufgrund des Fließverhaltens der Suspension oder von "Nadelstich"-Löchern, gute Homogenität der Dicke der Leuchtstoffschicht, hohe Präzision der Abbildung der Schattenmasken- Struktur auf die strukturierte Leuchtstoffschicht, hohe Konturenschärfe der einzelnen Leuchtstoffelemente, gute Haftung der Leuchtstoffelemente auf dem Schirmglas, geringe Farbverunreinigung der Leuchtstoffschicht einer Emissionsfarbe sowie geringe Schleierbildung auf nicht belichtetem Schirmglas.

Kriterien für eine gute Stabilität und Verarbeitbarkeit von Leuchtstoff-Suspensionen im Bildschirmprozeß sind u.a. eine hohe Lichtempfindlichkeit der Leuchtstoffsuspension, eine gute Stabilität der Teilchengrößenverteilung bei Zusatz von Elektrolytlösung und Behandlung mit Ultraschall, eine hohe Filtrierbarkeit über längere Zeit bei kritischen pH-Werten, ein geringes Sedimentationsvolumen und ein mittelfestes bis festes Leuchtstoffsediment nach 24 Stunden Sedimentation der Leuchtstoffsuspension.

Zahlreiche Eigenschaften der Leuchtstoffteilchen im naßchemischen Bildschirmprozeß sowohl bei der Verarbeitung in Suspension als auch bei der Bildung der Leuchtstoffschicht auf dem Bildschirmglas werden stark beeinflußt von den Oberflächeneigenschaften der Leuchtstoffpulver, aus denen die Leuchtstoffsuspensionen bereitet werden. Zur Steuerung der Oberflächeneigenschaften der Leuchtstoffpulver im Hinblick auf den Bildschirmprozeß hat es sich bewährt, die anorganischen Leuchtstoffpulver nach ihrer Herstellung mit chemisch andersartigen Beschich tungen zu versehen.

Aus der US 5,366,834 ist ein Verfahren zur Herstellung eines Bildschirmes für eine Röntgenröhre bekannt, bei dem die innere Oberfläche einer Frontglasscheibe mit einer Leuchtstoffssuspension beschichtet wird, und der Leuchtstoff a) Leuchtstoffteilchen, b) eine erste Schicht, die auf den Leuchtstoffteilchen gebildet wird in einer Menge von 0,1 bis 5 Gew.-%, bezogen auf das Gewicht der Leuchtstoffteilchen, die aus einem im wesentlichen gleichmäßigen Siliciumdioxidfilm besteht und c) eine zweite Schicht in einer Menge von 0,008 bis 1,5 Gew.-%, bezogen auf das Gewicht der Leuchtstoffteilchen, die auf der ersten Schicht gebildet wird und wenigstens ein Metall, ausgewählt aus der Gruppe, bestehend aus Zink und Aluminium und einem Erdalkalimetall und wenigstens einem Element ausgewählt aus der Gruppe bestehend aus kolloidalem Siliziumoxid, Aluminiumoxidsol und Titanoxidsol, die jeweils eine Partikelgröße von 50 Nanometer oder kleiner haben, enthält, umfaßt.

Heutzutage werden immer höhere Anforderungen an die Qualität von Bildschirmen in bezug auf Helligkeit, Farbreinheit, Schleierfreiheit und Konturenschärfe der strukturierten Leuchtstoffbeschichtung gestellt.

Aufgabe der vorliegenden Erfindung ist es, einen Bildschirm so mit einer Leuchtstoffschicht zu versehen, daß eine optimale Helligkeit, Farbreinheit, Schleierfreiheit, Konturenschärfe und Haftung des Leuchtstoffmaterials auf dem Bildschirmglas erzielt werden. Für eine hohe Packungsdichte des Leuchtstoffes in der Leuchtstoffschicht, eine gute Haftung des Leuchtstoffmaterials auf dem Bildschirmglas und damit eine hohe Bildschirmhelligkeit werden stabile Leuchtstoffsuspensionen benötigt.

Erfindungsgemäß wird die Aufgabe gelöst durch einen Bildschirm mit einer Leuchtstoffschicht, die eine Leuchtstoffzubereitung aus einem Leuchtstoff mit einer Beschichtungsschicht mit einer oder mehreren Sauerstoffverbindungen der Elemente Zink, Aluminium, Magnesium, Calcium und Barium und kolloidalen SiO₂-Partikeln enthält, wobei die kolloidalen SiO₂-Partikel aus SiO₂-Partikeln mit einer mittleren Partikelgröße 4 nm ≤ d ≤ 30 nm entsprechend einer spezifischen Oberfläche von 100 m²/g ≤ Aₛ ≤ 550 m²/g und SiO₂-Partikeln mit einer mittleren Partikelgröße 50 nm ≤ d ≤ 150 nm entsprechend einer spezifischen Oberfläche von 25 m²/g ≤ Aₛ ≤ 70 m²/g bestehen.

Ein erfindungsgemäß beschichteter Bildschirm zeichnet sich durch eine überraschend verbesserte Schleierfreiheit, Farbreinheit, Bildschirmhelligkeit und Haftung des Leuchtstoffes auf dem Bildschirmglas aus. Weiterhin zeigt die strukturierte Leuchtstoffschicht eine hohe Packungsdichte des Leuchtstoffmaterials. Außerdem sind die Leuchtstoffelemente scharf konturiert. Die Leuchtstoffschicht zeigt eine gute Homogenität und ist frei von "Nadelstich"-Löchern.

Im Rahmen der vorliegenden Erfindung ist es bevorzugt, daß die Beschichtungsschicht 0.01 Gew.-% bis 0.07 Gew.-% bezogen auf den Leuchtstoff kolloidale SiO₂-Partikel mit einer mittleren Partikelgröße 4 nm ≤ d ≤ 30 nm und 0.10 Gew.% bis 1.5 Gew.% bezogen auf den Leuchtstoff kolloidale SiO₂-Partikeln mit einer mittleren Partikelgröße 50 nm ≤ d ≤ 150 nm enthält.

Es ist weiterhin bevorzugt, daß die Beschichtungsschicht ein molares Verhältnis der Gesamtmenge der kolloidalen SiO₂-Partikel zu der Gesamtmenge der Sauerstoffverbindungen der Elemente Zn, Al, Mg, Ca und Ba von 5:1 bis 30:1 aufweist.

Im Rahmen der vorliegenden Erfindung ist es besonders bevorzugt, daß die Sauerstoffverbindung eine Zink-Sauerstoffverbindung ist.

Es ist bevorzugt, daß die kolloidalen SiO₂-Partikel mit einer mittleren Partikelgröße 50 nm ≤ d ≤ 150 nm entsprechend einer spezifischen Oberfläche von 25 m²/g ≤ Aₛ ≤ 70 m²/g eine polydisperse Partikelgrößenverteilung haben.

Es kann auch bevorzugt sein, daß die Beschichtung ein Farbfilterpigment enthält.

Weiterhin kann es auch bevorzugt sein, daß die Leuchtstoffzubereitung ein Farbfilterpigment in einer separaten Beschichtung enthält.

Außerdem betrifft die Erfindung eine Leuchtstoffzubereitung aus einem Leuchtstoff mit einer Beschichtungsschicht mit einer oder mehreren Sauerstoffverbindungen der Elemente Zink, Aluminium, Magnesium, Calcium und Barium und kolloidalen SiO₂-Partikeln, wobei die kolloidalen SiO₂-Partikel aus Partikeln mit einer mittleren Teilchengröße 4 nm ≤ d ≤ 30 nm entsprechend einer spezifischen Oberfläche von 100 m²/g ≤ Aₛ ≤ 550 m²/g und Partikeln mit einer mittleren Teilchengröße 50 nm ≤ d ≤ 150 nm entsprechend einer spezifischen Oberfläche von 25 m²/g ≤ Aₛ ≤ 70 m²/g bestehen.

Eine derartige Leuchtstoffzubereitung läßt sich sehr leicht verarbeiten, da sie eine sehr hohe Filtrierbarkeit auch über längere Zeit und bei niedrigeren pH-Werten zeigt. Die außergewöhnlich gute Formstabilität der Suspension erfindungsgemäß beschichteter Leuchtstoffe zeigt sich in der guten Stabilität der Teilchengrößenverteilung bei Zusatz von Elektrolytlösung und Behandlung mit Ultraschall. Nach 24 Stunden ergibt sich ein halbfestes bis festes Sediment. Weitere Vorteile sind die sehr geringe Schleierbildung, die verbesserte Haftung des Leuchtstoffes auf dem Bildschirmglas sowie die hohe Packungsdichte und gute Homogenität der sich ergebenden Leuchtstoffschichten.

Die Erfindung betrifft weiterhin ein Verfahren zur Herstellung einer Leuchtstoffzubereitung aus einem Leuchtstoff mit einer Beschichtungsschicht mit einer oder mehreren Sauerstoffverbindungen der Elemente Zink, Aluminium, Magnesium, Calcium und Barium und kolloidalen SiO₂-Partikeln, wobei eine Leuchtstoff-Aufschlämmung mit verdünntem Ammoniak auf pH ≥ 9.2 eingestellt wird und mit kolloidalen SiO₂-Partikeln mit der Teilchengröße 4 nm ≤ d ≤ 30 nm vermahlen wird, der Leuchtstoff-Aufschlämmung eine kolloidale Lösung von kolloidalen SiO₂-Partikeln mit einer mittleren Partikelgröße 50 nm ≤ d ≤ 150 nm hinzugefügt wird, eine wäßrige Ammoniumsalz-Lösung hinzugefügt wird, eine wäßrige Lösung eines wasserlöslichen Salzes eines der Elemente aus der Gruppe Zink, Aluminium, Magnesium, Calcium und Barium der Leuchtstoff-Aufschlämmung hinzugefügt wird, der pH-Wert der Leuchtstoff-Aufschlämmung mittels der verdünnten Säure auf pH ≤ 7 abgesenkt wird und der pH-Wert der Leuchtstoff-Aufschlämmung auf pH ≥ 8 angehoben wird,

Mit diesem Beschichtungsverfahren können Leuchtstoffpulver haftfest mit feinund grobteiligem kolloidalem SiO₂ sowie den Hydroxiden oder Oxiden der Elemente Zn, Al, Mg, Ca und Ba beschichtet werden.

Nachfolgend wird die Erfindung anhand von Beispielen näher erläutert.

Für die erfindungsgemäße Leuchtstoffzubereitung können als Ausgangsmaterialien Pulver aller üblichen Leuchtstoffe verwendet werden, z.B. blaues ZnS:Ag,Al, blaues ZnS:Ag,Cl, grünes ZnS:Cu,Au,Al, grünes ZnS:Cu,Al oder rotes Y₂OS:Eu.

Es kann auch bevorzugt sein, daß das Ausgangsmaterial ein bereits pigmentierter Leuchtstoff ist, der zur Verbesserung des Bildkontrastes mit Farbfilterpigmenten beschichtet ist, z.B. mit CoAl2O4 pigmentiertes ZnS:Ag,Al oder mit Fe203 pigmentiertes Y2O2S:Eu.

Das Farbpigment kann entweder in einem Beschichtungsprozeß zusammen mit den erfindungsgemäßen Beschichtungsbestandteilen, und zwar dem fein- und grobteiligen kolloidalen SiO₂ und einer oder mehrerer Sauerstoffverbindungen der Elemente Zn, Al, Mg, Ca und Ba auf dem Leuchtstoff abgeschieden werden oder in einem getrennten Beschichtungsprozeß auf die Leuchtstoffteilchen aufgebracht werden und eine separate Beschichtung bilden.

Die Leuchtstoffbeschichtung enthält eine oder mehrere Sauerstoffverbindungen der Elemente Zink, Aluminium, Magnesium, Calcium und Barium. Im Rahmen der vorliegenden Erfindung sollen unter "Sauerstoffverbindung" die Hydroxide und Oxide dieser Elemente verstanden werden.

Die Leuchtstoffbeschichtung enthält weiterhin zwei verschiedene Typen von kolloidalem SiO₂, und zwar erstens feinteiliges SiO₂ mit einer Teilchengröße 4 nm ≤ d ≤ 30 nm entsprechend einer spezifischen Oberfläche von 100 m²/g ≤ Aₛ ≤ 550 m²/g und zweitens grobteiliges SiO₂ mit einer mittleren Partikelgröße 50 nm ≤ d ≤ 150 nm entsprechend einer spezifischen Oberfläche von 25 m²/g ≤ Aₛ ≤ 70 m²/g.

Beispiele für feinteilige SiO₂-Kolloide mit einer Teilchengröße 4 nm ≤ d ≤ 30 nm entsprechend einer spezifischen Oberfläche von 100 m²/g ≤ As ≤ 550 m²/g sind: - NYACOL® 215(Akzo Nobel): Aₛ = 545 m²/g, LUDOX® FM (DuPont de Nemours): Aₛ = 450 m²/g, LUDOX® SM (DuPont de Nemours): Aₛ = 345 m²/g, LUDOX® AS (DuPont de Nemours): Aₛ = 135 m²/g, BINDZIL® 50/130 (Akzo Nobel): Aₛ = 130 m²/g, LEVASIL® 100 (Bayer): Aₛ = 100 m²/g.

Beispiele für grobteilige SiO₂-Kolloide mit einer mittleren Partikelgröße 50 nm ≤ d ≤ 150 nm entsprechend einer spezifischen Oberfläche von 25 m²/g ≤ Aₛ ≤ 70 m²/g sind: NYACOL® 9950 (Akzo Nobel): Aₛ = 27 m²/g, LEVASIL® VPAC4056 (Bayer): Aₛ = 50 m²/g, SYTON ®W (DuPont de Nemours): Aₛ = 70 m²/g, MONOSPHER® 100 (E. Merck), MONOSPHER® 150 (E. Merck). Bevorzugt wird ein grobteiliges SiO₂-Kolloid von polydispersem Typ. Es ist jedoch auch möglich, ein grobteiliges SiO₂-Kolloid von monodispersem Typ zu verwenden.

Das molare Verhältnis der Gesamtmenge an fein- und grobteiligem SiO₂-Kolloid zu der Gesamtmenge der Sauerstoffverbindungen der Elemente Zn, Al, Mg, Ca und Ba in der Leuchtstoffbeschichtung kann in einem Bereich von 5:1 bis 30:1 variiert werden.

Das Gewichtsverhältnis von Beschichtung zu Leuchtstoff in der Leuchtstoffzubereitung kann 0.10 Gew.-% bis 2.0 Gew.-% betragen.

Zur Herstellung der erfindungsgemäßen Leuchtstoffzubereitung werden nacheinander die folgenden Verfahrensschritte durchgeführt:
a) Zunächst wird die Leuchtstoff-Aufschlämmung mit verdünnter Ammoniaklösung auf mindestens pH 9.2 eingestellt. Im anschließenden naßchemischen Mahlprozeß wird der rohe Leuchtstoff mittels eines feinteiligen SiO₂-Kolloids mit einer Teilchengröße 4 nm ≤ d ≤ 30 nm entsprechend einer spezifischen Oberfläche von 100 m²/g ≤ Aₛ ≤ 550 m²/g gut dispergiert. Die Menge dieses feinteiligen SiO₂-Kolloids (berechnet als SiO₂) beträgt üblicherweise 0.010 Gew.-% bis 0.070 Gew.-% bezogen auf den rohen Leuchtstoff.
b) Zu dieser Leuchtstoff-Aufschlämmung wird die Lösung eines grobteiligen SiO₂-Kolloids mit einer mittleren Partikelgröße 50 nm ≤ d ≤ 150 nm entsprechend einer spezifischen Oberfläche von 25 m²/g ≤ Aₛ ≤ 70 m²/g hinzugefügt. Die Menge dieses grobteiligen SiO₂-Kolloids (berechnet als SiO₂) beträgt üblicherweise 0.10 Gew.-% bis 1.5 Gew.-% bezogen auf den rohen Leuchtstoff.
c) Wahlweise werden eine oder mehrere wäßrige Ammoniumsalz-Lösungen, bevorzugt Ammoniumacetat-Lösung oder auch Ammoniumnitrat-, Ammoniumsulfat- oder Ammoniumhydrogensulfat-Lösung, der Leuchtstoffsuspension hinzugefügt. Dabei beträgt das molare Verhältnis der Gesamtmenge der Ammoniumsalze zu der Gesamtmenge der Sauerstoffverbindungen der Elemente Zn, Al, Mg, Ca und Ba üblicherweise 1:10 bis 10:1.
d) Eine oder mehrere wäßrige Salzlösungen der Elemente Zink, Aluminium, Magnesium, Calcium und Barium, wobei die Acetat- und Sulfat-Salze bevorzugt werden, werden der Leuchtstoff-Aufschlämmung hinzugefügt. Dabei beträgt das molare Verhältnis der Gesamtmenge an fein- und grobteiligem kolloidalem SiO₂ zu der Gesamtmenge der Sauerstoffverbindungen der Elemente Zn, Al, Mg, Ca oder Ba üblicherweise 5:1 bis 30:1.
e) Mit verdünnten Säure, z.B. CH₃COOH, H₂SO₄, HNO₃ oder HCl wird der pH-Wert der Leuchtstoff-Aufschlämmung auf mindestens pH 7 abgesenkt, falls dieser Wert noch nicht erreicht ist.
f) Mit einer wässrigen basischen Lösung, z.B. verdünnter Ammoniaklösung, verdünnter Kalilauge oder Natronlauge wird der pH-Wert der Leuchtstoff-Aufschlämmung auf pH ≥ 8 angehoben und einige Zeit gerührt.
g) Falls die Destabilisierung der Produktsuspension des beschichteten Leuchtstoffes nicht ausreicht, wird durch Hinzufügung einer oder mehrerer wäßriger Ammoniumsalz-Lösungen, bevorzugt Ammoniumacetat-Lösung oder auch Ammoniumnitrat-, Ammoniumsulfat- oder Ammoniumhydrogensulfat-Lösung, die Leuchtstoffsuspension vollständig destabilisiert, wobei der pH-Wert der Leuchtstoff-Aufschlämmung durch Zugabe von Ammoniak-Lösung bei mindestens pH 8.0 gehalten wird. Die Aufschlämmung des beschichteten Leuchtstoffes wird nochmals einige Zeit gerührt.
h) Den so beschichteten Leuchtstoff läßt man sedimentieren. Es wird dekantiert, wahlweise gewaschen und abfiltriert.
i) Bei 140 °C wird die Leuchtstoffzubereitung an Luft mehrere Stunden getrocknet.

Die Einstellung eines pH-Wertes von ≥ 9.2 mit verdünnter Ammoniaklösung vor der Hinzufügung des feinteiligen SiO₂-Kolloids in Verfahrenschritt a) zur Dispergierung ist wichtig, um eine gute Filtrierbarkeit der Leuchtstoffsuspension nach Ende des naßchemischen Mahlprozesses beim anschließenden Fein-Naßsieben der Leuchtstoffsuspension zu erzielen. Falls diese Bedingung nicht eingehalten wird, ergibt sich nach der Dispergierung eine deutlich verringerte Filtrierbarkeit der stabilisierten Leuchtstoffsuspension.

Gegebenenfalls kann zwischen Verfahrensschritt a) und Verfahrensschritt b) die naßchemische Pigmentierung des Leuchtstoffes durchgeführt werden, z.B. als Fällungsreaktion oder als kolloidchemische Reaktion. Nach der Pigmentierung wird die Leuchtstoff-Aufschlämmung gewaschen und auf einen pH-Wert von 7.0 ≤ pH ≤ 9.0 eingestellt, bevor sie gemäß Verfahrensschritt b) weiterverarbeitet wird. Falls erforderlich, z.B. bei Bildung der Pigmentverbindung aus einem gefällten Vorprodukt oder zwecks Ausbildung einer speziellen Morphologie der Pigmentteilchen oder zur Verbesserung der Haftung des Pigments auf dem Leuchtstoff, wird dem Trocknungsschritt i) ein Glühprozeß bei erhöhter Temperatur nachgeschaltet.

Der Bildschirm kann z.B. nach dem "Flowcoating" Verfahren mit der erfindungsgemäßen Leuchtstoffzubereitung folgendermaßen hergestellt werden. Das beschichtete Leuchtstoffpulver einer Emissionsfarbe wird in einer mittels z.B. Ammoniumdichromat (ADC) photoaktivierten Binderlösung z.B. auf Polyvinylalkohol(PVA)-Basis dispergiert. Die einzelnen Komponenten der Leuchtstoffsuspension, d.h. Leuchtstoffpulver, Wasser, Binder, Dispergiermittel, Stabilisator und lichtempfindliche Komponente, werden abhängig von dem jeweiligen Leuchtstoff und den Verarbeitungsbedingungen der Suspension im Bildschirmprozeß in bestimmter Reihenfolge und Konzentration nach einer definierten Rezeptur gemischt. Dann wird die Leuchtstoffsuspension naßgesiebt. Die Suspension der Leuchtstoffzubereitung wird auf die Innenseite der in der "Flowcoat"-Maschine rotierenden vorbereiteten Bildschirmglasplatte aufgebracht. Durch die Rotation des Bildschirmes verteilt sich die Leuchtstoffsuspension gleichmäßig auf dem Bildschirm. Überschüssige Suspension wird abgeschleudert. Die gebildete feuchte Leuchtstoffschicht wird getrocknet. Auf der Innenseite der Bildschirmglasplatte wird eine Schattenmaske in definiertem Abstand von der Leuchtstoffschicht angebracht. Durch diese Schattenmaske wird die Leuchtstoffschicht mit ultraviolettem Licht bestrahlt, wodurch die bestrahlten Bereiche der Leuchtstoffschicht aushärten. Mit warmem Wasser wird die Leuchtstoffschicht entwickelt, d.h. die nicht ausgehärteten Teile der Leuchtstoffschicht entfernt. Die strukturierte Leuchtstoffschicht wird getrocknet.

Diese Prozeßschritte werden nacheinander für alle drei Leuchtstofftypen in den Emissionsfarben Grün, Blau und Rot durchgeführt. Dann wird bei circa 440 °C wird der Bildschirm ausgeheizt, um den in der Leuchtstoffschicht verbliebenen organischen Binder zu entfernen.

### Ausführungsbeispiel 1

1 kg grün leuchtendes ZnS:Cu,Au,Al Leuchtstoffpulver wird nach dem Waschen und Sieben dekantiert. Mit verdünnter Ammoniaklösung wird ein pH-Wert von 9.3 eingestellt. Es wird 13 g 3.0 SiO₂-Gew.-% Lösung LUDOX® AS (DuPont de Nemours) als Dispergiermittel hinzugefügt. Diese Leuchtstoffsuspension wird 2 Stunden naßgemahlen. Nach Abtrennung der Mahlkörper, Verdünnen auf ein Suspensionsvolumen von 3.0 L Wasser und Fein-Naßsieben erhält man die stabilisierte Leuchtstoffsuspension.

Der gut dispergierten Suspension des ZnS:Cu,Au,Al-Leuchtstoffes mit einem pH-Wert von 8.0 wird 170 g 3.0 SiO₂-Gew.-% Lösung NYACOL® 9950 (Akzo Nobel) hinzugefügt. Der Leuchtstoffsuspension wird weiterhin 9.0 ml einer 2 molaren Ammoniumacetat-Lösung hinzugefügt, wodurch der pH-Wert auf 7.1 sinkt. Dann wird 18 g einer Zn(CH₃COO)₂-Lösung hinzugefügt, die 8.0 Gew.-% ZnO enthält. Dabei sinkt der pH-Wert auf pH 6.0. Durch Zugabe von 1 molarer CH₃COOH-Lösung wird der pH-Wert auf 5.5 abgesenkt. Mit 3 molarer Ammoniak-Lösung wird der pH-Wert auf 9.0 angehoben. Nach 5 Minuten Rühren wird die Leuchtstoffsuspension destabilisiert durch gleichzeitige Zugabe von 9.0 ml einer 2 molaren Ammoniumacetat-Lösung und 5 ml einer 3 molaren Ammoniaklösung, wobei der pH-Wert konstant bei 9.0 gehalten wird. Nachdem die Leuchtstoffsuspension weitere 30 Minuten gerührt wurde, läßt man die Suspension des beschichteten ZnS:Cu,Au,AI-Leuchtstoffes sedimentieren, dekantiert und wäscht 4 Mal mit jeweils 2 Liter Wasser. Beim letzten Waschvorgang werden eine spezifische Ionenleitfähigkeit von 9.3 mS cm⁻¹ und ein pH-Wert von 9.2 in der Leuchtstoffsuspension gemessen. Schließlich wird der beschichtete Leuchtstoff abfiltriert und circa 15 Stunden bei 140 °C an Luft getrocknet.

### Ausführungsbeispiel 2

1 kg grün leuchtendes ZnS:Cu,Au,Al Leuchtstoffpulver wird wie in Ausführungsbeispiel 1 mit LUDOX® AS-Lösung (DuPont de Nemours) dispergiert. Der gut dispergierten Suspension des ZnS:Cu,Au,Al Leuchtstoffes mit einem pH-Wert von 8.1 wird 170 g 3.0 SiO₂-Gew.-% Lösung LEVASIL® VPAC4056 (Bayer) hinzugefügt. Der Leuchtstoffsuspension wird weiterhin 5.9 ml einer 2 molaren Ammoniumacetat-Lösung hinzugefügt, wodurch der pH-Wert auf pH 7.3 sinkt. Dann wird 12 g einer Zn(CH₃COO)₂-Lösung hinzugefügt, die 8.0 Gew.-% ZnO enthält. Dabei sinkt der pH-Wert auf pH 5.9. Durch Zugabe von 1 molarer CH₃COOH-Lösung wird der pH-Wert auf 5.5 abgesenkt. Mit 4 ml einer 3 molaren Ammoniaklösung wird der pH-Wert auf 9.0 angehoben. Nach 7 Minuten Rühren wird die Leuchtstoffsuspension destabilisiert durch gleichzeitige Zugabe von 10 ml einer 2 molaren Ammoniumacetat-Lösung und circa 1 ml einer 3 molaren Ammoniak-Lösung, wobei der pH-Wert konstant bei pH 9.0 gehalten wird. Nachdem die Leuchtstoffsuspension weitere 30 Minuten gerührt wurde, läßt man die Suspension des beschichteten ZnS:Cu,Au,Al Leuchtstoffes sedimentieren, dekantiert und wäscht 2 Mal mit jeweils 2 Liter Wasser. Beim letzten Waschvorgang werden eine spezifische Ionenleitfähigkeit von 25 mS cm⁻¹ und ein pH-Wert von 9.1 in der Leuchtstoffsuspension gemessen. Schließlich wird der beschichtete Leuchtstoff abfiltriert und circa 15 Stunden bei 140 °C an Luft getrocknet.

### Ausführungsbeispiel 3

1 kg vorpigmentiertes blau leuchtendes ZnS:Ag,Al Leuchtstoffpulver wird wie in Ausführungsbeispiel 1 mit LUDOX® AS-Lösung (DuPont de Nemours) dispergiert. Der gut dispergierten Suspension des ZnS:Ag,Al Leuchtstoffes mit einem pH-Wert von 9.2 wird 160 ml 0.5 molare NYACOL® 9950-Lösung (Akzo Nobel) hinzugefügt. Der Leuchtstoffsuspension wird weiterhin 6.3 ml einer 2 molaren Ammoniumacetat-Lösung hinzugefügt, wodurch der pH-Wert auf 8.5 sinkt. Dann wird 12 ml einer 0.5 molaren Zn(NO₃)₂-Lösung hinzugefügt. Dabei sinkt der pH-Wert auf 7.1. Durch Zugabe von 4.3 ml einer 1 molaren CH₃COOH-Lösung wird ein pH-Wert von 5.9 eingestellt. Mit 5 Gew.-% Ammoniaklösung wird der pH-Wert auf 9.0 angehoben. Durch Zugabe von 12 ml einer 2 molaren Ammoniumacetat-Lösung wird die Leuchtstoffsuspension destabilisiert, wobei der pH-Wert konstant bei 9.0 bleibt. Nachdem die Leuchtstoffsuspension weitere 30 Minuten gerührt wurde, läßt man die Suspension des beschichteten ZnS:Ag,Al Leuchtstoffes sedimentieren, dekantiert und wäscht 2 Mal mit 3 Liter Wasser. Beim letzten Waschvorgang werden eine spezifische Ionenleitfähigkeit von 63 mS cm⁻¹ und ein pH-Wert von 8.8 in der Leuchtstoffsuspension gemessen. Schließlich wird der beschichtete Leuchtstoff abfiltriert und 17 Stunden bei 140 °C an Luft getrocknet.

### Ausführungsbeispiel 4

1 kg grün leuchtendes ZnS:Cu,Au,Al Leuchtstoffpulver wird wie in Ausführungsbeispiel 1 mit LUDOX® SM (DuPont de Nemours) dispergiert. Der gut dispergierten Suspension des ZnS:Cu,Au,Al Leuchtstoffes mit einem pH-Wert von 8.0 wird 90 g 3.0 SiO₂-Gew.-% NYACOL® 9950-Lösung (Akzo Nobel) hinzugefügt. Der Leuchtstoffsuspension wird weiterhin 1.8 ml einer 2 molaren Ammoniumacetat-Lösung hinzugefügt. Dann wird 7.1 ml einer 0.50 molaren Al(NO₃)₃-Lösung hinzugefügt. Dabei sinkt der pH-Wert auf < 5.5. Mit 3 molarer Ammoniaklösung wird der pH-Wert auf 9.0 angehoben. Nach 10 Minuten Rühren wird gleichzeitig 1.8 ml 2 molare Ammoniumacetat-Lösung und soviel 3 molare Ammoniak-Lösung hinzugefügt, daß der pH-Wert konstant 9.0 beträgt. Nachdem die Leuchtstoffsuspension weitere 20 Minuten gerührt wurde, läßt man die Suspension des beschichteten ZnS:Cu,Au,Al Leuchtstoffes sedimentieren, dekantiert und wäscht 2 Mal mit jeweils 2 Liter Wasser. Schließlich wird der beschichtete Leuchtstoff abfiltriert und circa 15 Stunden bei 140 °C an Luft getrocknet.

### Ausführungsbeispiel 5

1 kg blau leuchtendes ZnS:Ag,Al Leuchtstoffpulver wird wie in Ausführungsbeispiel 1 mit LUDOX® AS-Lösung (DuPont de Nemours) dispergiert. Der gut dispergierten Suspension des ZnS:Ag,Al Leuchtstoffes mit einem pH-Wert von 8.0 wird 90 g 3.0 SiO₂-Gew.-% LEVASIL® VPAC4056-Lösung (Bayer) hinzugefügt. Der Leuchtstoffsuspension wird weiterhin 2.7 ml einer 2 molaren Ammoniumacetat-Lösung hinzugefügt. Dann wird 5.3 ml einer 0.50 molaren Ba(CH₃COO)₂-Lösung hinzugefügt. Durch Zugabe von 1 molarer CH₃COOH-Lösung wird der pH-Wert auf 5.5 abgesenkt . Mit 3 molarer Ammoniaklösung wird der pH-Wert auf 9.0 angehoben. Nach 10 Minuten Rühren wird gleichzeitig 2.7 ml 2 molare Ammoniumacetat-Lösung und soviel 3 molare Ammoniak-Lösung hinzugefügt, daß der pH-Wert konstant 9.0 beträgt. Nachdem die Leuchtstoffsuspension weitere 20 Minuten gerührt wurde, läßt man die Suspension des beschichteten ZnS:Ag,Al Leuchtstoffes sedimentieren, dekantiert und wäscht 2 Mal mit jeweils 2 Liter Wasser. Schließlich wird der beschichtete Leuchtstoff abfiltriert und circa 15 Stunden bei 140 °C an Luft getrocknet.

### Ausführungsbeispiel 6

1 kg grün leuchtendes ZnS:Cu,Au,Al Leuchtstoffpulver wird wie in Ausführungsbeispiel 1 mit LUDOX® AS-Lösung (DuPont de Nemours) dispergiert. Der gut dispergierten Suspension des ZnS:Cu,Au,Al-Leuchtstoffes mit einem pH-Wert von 8.0 wird 170 g 3.0 SiO₂-Gew.-% Lösung NYACOL® 9950 (Akzo Nobel) hinzugefügt. Der Leuchtstoffsuspension wird weiterhin 9.0 ml einer 2 molaren Ammoniumnitrat-Lösung hinzugefügt, wodurch der pH-Wert auf 7.2 sinkt. Dann wird 18 g einer Zn(NO₃)₂-Lösung hinzugefügt, die 8.0 Gew.-% ZnO enthält. Dabei sinkt der pH-Wert auf 5.2. Mit 3 molarer Ammoniak-Lösung wird der pH-Wert auf 9.0 angehoben. Nach 5 Minuten Rühren wird die Leuchtstoffsuspension destabilisiert durch gleichzeitige Zugabe von 9.0 ml einer 2 molaren Ammoniumnitrat-Lösung und 2.5 ml einer 3 molaren Ammoniaklösung, wobei der pH-Wert konstant bei 9.0 gehalten wird. Nachdem die Leuchtstoffsuspension weitere 30 Minuten gerührt wurde, läßt man die Suspension des beschichteten ZnS:Cu,Au,Al-Leuchtstoffes sedimentieren, dekantiert und wäscht 4 Mal mit jeweils 2 Liter Wasser. Beim letzten Waschvorgang werden eine spezifische Ionenleitfähigkeit von 7.4 mS cm⁻¹ und ein pH-Wert von 9.2 in der Leuchtstoffsuspension gemessen. Schließlich wird der beschichtete Leuchtstoff abfiltriert und circa 15 Stunden bei 140 °C an Luft getrocknet.

### Ausführungsbeispiel 7

1 kg grün leuchtendes ZnS:Cu,Au,Al Leuchtstoffpulver wird wie in Ausrührungsbeispiel 1 mit LUDOX® AS-Lösung (DuPont de Nemours) dispergiert. Der gut dispergierten Suspension des ZnS:Cu,Au,Al-Leuchtstoffes mit einem pH-Wert von 8.0 wird 170 g 3.0 SiO₂-Gew.-% Lösung NYACOL® 9950 (Akzo Nobel) hinzugefügt. Der Leuchtstoffsuspension wird weiterhin 9.0 ml einer 2 molaren Ammoniumnitrat-Lösung hinzugefügt, wodurch der pH-Wert auf pH 7.3 sinkt. Dann wird 18 g einer ZnSO₄-Lösung hinzugefügt, die 8.0 Gew.-% ZnO enthält. Dabei sinkt der pH-Wert auf 5.3. Mit 3 molarer Ammoniaklösung wird der pH-Wert auf 9.0 angehoben. Nach 5 Minuten Rühren wird die Leuchtstoffsuspension destabilisiert durch gleichzeitige Zugabe von 9.0 ml einer 1 molaren Ammoniumsulfat-Lösung und 2.5 ml einer 3 molaren Ammoniaklösung, wobei der pH-Wert konstant bei 9.0 gehalten wird. Nachdem die Leuchtstoffsuspension weitere 30 Minuten gerührt wurde, läßt man die Suspension des beschichteten ZnS:Cu,Au,Al-Leuchtstoffes sedimentieren, dekantiert und wäscht 4 Mal mit jeweils 2 Liter Wasser. Beim letzten Waschvorgang werden eine spezifische Ionenleitfähigkeit von 22 mS cm⁻¹ und ein pH-Wert von 8.9 in der Leuchtstoffsuspension gemessen. Schließlich wird der beschichtete Leuchtstoff abfiltriert und circa 15 Stunden bei 140 °C an Luft getrocknet.

### Ausführungsbeispiel 8

1 kg grün leuchtendes ZnS:Cu,Au,Al Leuchtstoffpulver wird wie in Ausführungsbeispiel 1 mit LUDOX® AS-Lösung (DuPont de Nemours) dispergiert. Der gut dispergierten Suspension des ZnS:Cu,Au,Al-Leuchtstoffes mit einem pH-Wert von 8.4 wird 170 g 3.0 SiO₂-Gew.-% Lösung LEVASIL® VPAC4056 (Bayer) hinzugefügt. Dann wird 18 g einer Zn(NO₃)₂-Lösung hinzugefügt, die 8.0 Gew.-% ZnO enthält. Dabei sinkt der pH-Wert auf 5.3. Mit 3 molarer Ammoniak-Lösung wird der pH-Wert auf 9.0 angehoben. Nachdem die Leuchtstoffsuspension weitere 30 Minuten gerührt wurde, läßt man die Suspension des beschichteten ZnS:Cu,Au,Al-Leuchtstoffes sedimentieren, dekantiert und wäscht 3 Mal mit jeweils 2 Liter Wasser. Beim letzten Waschvorgang werden eine spezifische Ionenleitfähigkeit von 18 mS cm⁻¹ und ein pH-Wert von 9.0 in der Leuchtstoffsuspension gemessen. Schließlich wird der beschichtete Leuchtstoff abfiltriert und circa 15 Stunden bei 140 °C an Luft getrocknet.

### Meßergebnisse

Tabelle 1 veranschaulicht den positiven Einfluß erfindungsgemäßer Beschichtungszusammensetzungen sowie den Einfluß erfindungsgemäßer Verfahrensbedingungen, z.B. den Einsatz von Ammoniumsalz, auf die Destabilisierung der Produktsuspension am Ende des Beschichtungsprozesses. Alle erfindungsgemäßen Beschichtungen 5 bis 11 in Tabelle 1 zeigen eine vollständige Destabilisierung der Produktsuspension auch bei sehr hohen molarem Verhältnis von gesamtem kolloidalem SiO₂ zum ZnO in der Beschichtung von z.B. 10 oder 15. Hingegen kann die Destabilisierung der Produktsuspension der nicht erfindungsgemäßen Referenzbeschichtungen 1 bis 4 nur über eine Erhöhung des Anteils der ZnO-Komponente in der Beschichtung erreicht werden, z.B. wird je nach eingesetzter Menge an SiO₂-haltigem Dispergiermittel eine vollständige Destabilisierung der Produktsuspension bei einem molaren Verhältnis von 2.2 (vgl. Tabelle 1, Referenzbeschichtungen 1) und 2) bzw. 1.1 (vgl. Tabelle 1, Referenzbeschichtungen 3) und 4) erreicht . Diese recht niedrigen molaren Verhältnisse von gesamtem kolloidalem SiO₂ zum ZnO führen, generell zu geringerer Suspensionsstabilität und nicht-optimalen Schirmeigenschaften im Bildschirmprozeß, z.B. zu einer erhöhten Schleierbildung verglichen mit erfindungsgemäßen Beschichtungen.

Tabelle 2 zeigt anhand von Meßergebnisse an Suspensionen und Bildschirmen für erfindungsgemäß beschichtete Leuchtstoffe im Vergleich mit nichterfindungsgemäßen Referenzbeschichtungen wie durch die erfindungsgemäßen Beschichtungszusammensetzungen die Suspensionsstabilität und die Schirmeigenschaften verbessert werden.

**Tab. 1**

| Probe Leuchtstoff-Typ | Ammoniumsalz im Beschichtungsprozeß | feinteiliges SiO₂ Kolloid im Ansatz/ wt.% SiO₂ | grobteiliges SiO₂ Kolloid im Ansatz/ wt.% SiO₂ | ZnO im Ansatz/ wt.% (Gegen-Anion) | n(SiO₂ gesamt)/ n(ZnO) im Ansatz | Stabilität der Produkt-Suspension |
|---|---|---|---|---|---|---|
| Referenzbeschichtungen | | | | | | |
| 1 ZnS:Cu, Au,Al | - | 0.012 K₂ SiO₃ | 0.25 SYTON W | 0.083 (Nitrat) | 4.3 | teilweise stabil |
| 2 ZnS:Cu, Au,Al | - | 0.012 K₂ SiO₃ | 0.25 SYTON W | 0.16 (Nitrat) | 2.2 | vollständig destabilisiert |
| 3 ZnS:Cu, Au,Al | - | 0.039 K₂ SiO₃ | 0.26 SYTON W | 0.27 (Nitrat) | 1.4 | teilweise stabil |
| 4 ZnS:Cu, Au,Al | - | 0.039 K₂ SiO₃ | 0.25 SYTON W | 0.27 (Nitrat) | 1.1 | vollständig destabilisiert |

| Erfindungsgemäße Beschichtungen | | | | | | |
|---|---|---|---|---|---|---|
| 5 ZnS:Cu, Au,Al | NH₄CH₃COO in Prozeßschritt c) und g) | 0.040 LUDOX AS | 0.50 LEVASIL VPAC4056 | 0.073 (Acetat) | 10 | vollständig destabilisiert |
| 6 ZnS:Cu, Au,Al | NH₄CH₃COO in Prozeßschritt c) und g) | 0.040 LUDOX AS | 0.50 NYACOL 9950 | 0.049 (Acetat) | 15 | vollständig destabilisiert |
| 7 ZnS:Cu, Au,Al | NH₄CH₃COO in Prozeßschritt c) und g) | 0.040 LUDOX AS | 0.50 NYACOL 9950 | 0.073 (Nitrat) | 10 | vollständig destabilisiert |
| 8 ZnS:Cu, Au,Al | NH₄CH₃COO in Prozeßschritt c) und g) | 0.040 LUDOX AS | 0.50 NYACOL 9950 | 0.073 (Sulfat) | 10 | vollständig destabilisiert |
| 9 ZnS:Cu, Au,Al | NH₄CH₃COO in Prozeßschritt c) und g) | 0.040 LUDOX AS | 0.50 LEVASIL VPAC4056 | 0.073 (Acetat) | 10 | vollständig destabilisiert |
| 10 ZnS:Cu, Au,Al | NH₄CH₃COO in Prozeßschritt c) und g) | 0.040 LUDOX AS | 0.50 LEVASIL VPAC4056 | 0.073 (Acetat) | 10 | vollständig destabilisiert |
| 11 ZnS:Cu, Au,Al | - | 0.040 LUDOX AS | 0.50 LEVASIL VPAC4056 | 0.073 (Acetat) | 10 | vollständig destabilisiert |

**Tab. 2**

| Probe Leuchtstoff-Typ | Beschichtung | Filtrierbarkeit / mL / 10s | Destabilisierungstest Δd₅₀ /µm | Sediment | Schleierbildung | Punktfüllung |
|---|---|---|---|---|---|---|
| Erfindungsgemäße Beschichtungen | | | | | | |
| 1 ZnS:Cu, Au,Al | 0.050 Gew.-% SiO₂ aus LUDOX SM, 0.27 Gew.-% SiO₂ aus NYACOL9950, 0.050 Gew.-% ZnO +NH₄CH₃COO, n(SiO₂ gesamt) / n(ZnO) = 8.7 | frisch: 680 nach 6 Tagen: 680 | 0.093 | halbfest | sehr schwach | gut |
| 2 ZnS:Cu, Au,Al | 0.050 Gew.-% SiO₂ aus LUDOX AS, 0.47 Gew.-% SiO₂ aus NYACOL9950, 0.050 Gew.-% ZnO +NH₄CH₃COO, n(SiO₂ gesamt) / n(ZnO) = 14.1 | frisch: 570 nach 3 Tagen: 560 | 0.11 | halbfest | sehr schwach | gut |
| 3 ZnS:Ag | 0.050 Gew.-% SiO₂ aus LUDOX AS, 0.27 Gew.-% SiO₂ aus NYACOL9950, 0.050 Gew.-% ZnO +NH₄CH₃COO, n(SiO₂ gesamt) / n(ZnO) = 8.7 | frisch: 410 nach 3 Tagen: 470 | 0.000 | fest | sehr schwach | gut |
| 4 ZnS:Ag | 0.050 Gew.-% SiO₂ aus LUDOX AS, 0.47 Gew.-% SiO₂ aus NYACOL9950, 0.050 Gew.-% ZnO +NH₄CH₃COO, n(SiO₂ gesamt) / n(ZnO) = 14.1 | frisch: 650 nach 3 Tagen: 720 | 0.07 | halbfest | sehr schwach | gut |

| Referenzbeschichtungen | | | | | | |
|---|---|---|---|---|---|---|
| 5 ZnS:Cu, Au,Al | 0.050 Gew.-% SiO₂ aus LUDOX SM, 0.27 Gew.-% SiO₂ aus NYACOL9950, 0.20 Gew.-% ZnO +NH₄CH₃COO, n(SiO₂ gesamt) / n(ZnO) = 2.2 | frisch: 680 nach 6 Tagen: 660 | 0.528 | halbfest | mittel | mittelmäßig |
| 6 ZnS:Cu, Au,Al | 0.060 Gew.-% SiO₂ aus LUDOX AS, 0.35 Gew.-% SiO₂ aus LEVASIL VPAC 4056, 0.12 Gew.-% ZnO +NH₄CH₃COO, n(SiO₂ gesamt) / n(ZnO) = 4.5 | frisch: 630 nach 3 Tagen: 120 | 0.19 | halblocker | schwach | schlecht |
| 7 ZnS:Cu, Au,Al | 0.020 Gew.-% SiO₂ aus K₂SiO₃, 0.25 Gew.-% ZnO n(SiO₂ gesamt) / n(ZnO) = 0.11 | frisch: 680 nach 6 Tagen: 530 | 0.141 | fest | stark | schlecht |

## Patentansprüche

1. Bildschirm mit einer Leuchtstoffschicht, die eine Leuchtstoffzubereitung aus einem Leuchtstoff mit einer Beschichtungsschicht mit einer oder mehreren Sauerstoffverbindungen der Elemente Zink, Aluminium, Magnesium, Calcium und Barium und kolloidalen SiO₂-Partikeln enthält,
**dadurch gekennzeichnet,**
**dass** die kolloidalen SiO₂-Partikel aus SiO₂-Partikeln mit einer mittleren Partikelgröße 4 nm ≤ d ≤ 30 nm entsprechend einer spezifischen Oberfläche von 100 m²/g ≤ Aₛ ≤ 550 m²/g und SiO₂-Partikeln mit einer mittleren Partikelgröße 50 nm ≤ d ≤ 150 nm entsprechend einer spezifischen Oberfläche von 25 m²/g ≤ Aₛ ≤ 70 m²/g bestehen und
die Beschichtungsschicht ein molares Verhältnis der Gesamtmenge der kolloidalen SiO₂-Partikel zu der Gesamtmenge der Sauerstoffverbindungen der Elemente Zn, Al, Mg, Ca und Ba von 5:1 bis 30:1 aufweist.

2. Bildschirm mit einer Leuchtstoffschicht gemäß Anspruch 1,
**dadurch gekennzeichnet,**
**dass** die Beschichtungsschicht 0.01 Gew.-% bis 0.07 Gew.-% bezogen auf den Leuchtstoff kolloidale SiO₂-Partikel mit einer mittleren Partikelgröße 4 nm ≤ d ≤ 30 nm und 0.10 Gew.-% bis 1.5 Gew.-% bezogen auf den Leuchtstoff kolloidale SiO₂-Partikeln mit einer mittleren Partikelgröße 50 nm ≤ d ≤150 nm enthält.

3. Bildschirm mit einer Leuchtstoffschicht gemäß Anspruch 1,
**dadurch gekennzeichnet,**
**dass** die Sauerstoffverbindung eine Zink-Sauerstoffverbindung ist.

4. Bildschirm mit einer Leuchtstoffschicht gemäß Anspruch 1,
**dadurch gekennzeichnet,**
**dass** die kolloidalen SiO₂-Partikeln mit einer mittleren Partikelgröße 50 nm ≤ d ≤ 150 nm entsprechend einer spezifischen Oberfläche von 25 m²/g ≤ Aₛ ≤ 70 m²/g eine polydisperse Partikelgrößenverteilung haben.

5. Bildschirm mit einer Leuchtstoffschicht gemäß Anspruch 1,
**dadurch gekennzeichnet,**
**dass** die Beschichtungsschicht ein Farbfilterpigment enthält.

6. Bildschirm mit einer Leuchtstogschicht gemäß Anspruch 1,
**dadurch gekennzeichnet,**
**dass** die Leuchtstoffzubereitung ein Farbfilterpigment in einer separaten Beschichtung enthält.

7. Leuchtstoffzubereitung aus einem Leuchtstoff mit einer Beschichtungsschicht mit einer oder mehreren Sauerstoffverbindungen der Elemente Zink, Aluminium, Magnesium, Calcium und Barium und kolloidalen SiO₂-Partikeln
**dadurch gekennzeichnet,**
**dass** die kolloidalen SiO₂-Partikel aus SiO₂-Partikeln mit einer mittleren Partikel größe 4 nm ≤ d ≤ 30 nm entsprechend einer spezifischen Oberfläche von 100 m²/g ≤ Aₛ ≤ 550 m²/g und SiO₂-Partikeln mit einer mittleren Partikelgröße 50 nm ≤ d ≤ 150 nm entsprechend einer spezifischen Oberfläche von 25 m²/g *≤* Aₛ ≤ 70 m²/g bestehen und
die Beschichtungsschicht ein molares Verhältnis der Gesamtmenge der kolloidalen SiO₂-Partikel zu der Gesamtmenge der Sauerstoffverbindungen der Elemente Zn, Al, Mg, Ca und Ba von 5:1 bis 30:1 aufweist.

8. Verfahren zur Herstellung einer Leuchtstoffzubereitung aus einem Leuchtstoff mit einer Beschichtungsschicht mit einer oder mehreren Sauerstoffverbindungen der Elemente Zink, Aluminium, Magnesium, Calcium und Barium und kolloidalen SiO₂Partikeln,
wobei eine Leuchtstoffaufschlämmung mit verdünntem Ammoniak auf pH ≥ 9.2 eingestellt wird und mit kolloidalen SiO₂Partikeln mit einer Partikelgröße von 4 nm ≤ d ≤ 30 nm vermahlen wird, der Leuchtstoffaufschlämmung eine kolloidale Lösung von kolloidalen SiO₂-Partikeln mit einer mittleren Partikelgröße 50 nm ≤ d ≤ 150 nm hinzugefügt wird, eine wäßrige Ammoniumsalz-Lösung hinzugefügt wird, eine wäßrige Lösung eines wasserlöslichen Salzes eines der Elemente aus der Gruppe Zink, Aluminium. Magnesium, Calcium und Barium der Leuchtstoffaufschlämmung hinzugefügt wird, so dass die Beschichtungsschicht ein molares Verhältnis der Gesamtmenge der kolloi dalen SiO₂-Partikel zu der Gesamtmenge der Sauerstoffverbindungen der Elemente Zn, Al, Mg, Ca und Ba von 5:1 bis 30:1 aufweist,
der pH-Wert der Leuchtstoffaufschlämmung mittels der verdünnten Säure auf pH ≤ 7 abgesenkt wird und der pH-Wert der Leuchtstoffaufschlämmung auf pH ≥ 8 angehoben wird.

## Claims

1. A display screen having a phosphor coating comprising a phosphor preparation of a phosphor provided with a coating which comprises one or more oxygen compounds of the elements zinc, aluminum, magnesium, calcium and barium as well as colloidal SiO₂ particles, **characterized in that** the colloidal SiO₂ particles are composed of SiO₂ particles having an average particle size of 4 nm ≤ d ≤ 30 nm, corresponding to a specific surface of 100 m²/g ≤ Aₛ ≤ 550 m²/g, and SiO₂ particles having an average particle size of 50 nm ≤ d ≤ 150 nm, corresponding to a specific surface of 25 m²/g ≤ Aₛ ≤ 70 m²/g, and the molar ratio of the overall quantity of colloidal SiO₂ particles to the overall quantity of the oxygen compounds of the elements Zn, Al, Mg, Ca and Ba ranges from 5:1 to 30:1 in the coating.

2. A display screen having a phosphor coating as claimed in Claim 1,
**characterized in that** the coating comprises 0.01 wt.% to 0.07 wt.%, calculated with respect to the phosphor, of colloidal SiO₂ particles having an average particle size of 4 nm ≤ d ≤ 30 nm, and 0.10 wt.% to 1.5 wt.%, calculated with respect to the phosphor, of colloidal SiO₂ particles having an average particle size of 50 nm ≤ d ≤ 150 nm.

3. A display screen having a phosphor coating as claimed in Claim 1,
**characterized in that** the oxygen compound is a zinc-oxygen compound.

4. A display screen having a phosphor coating as claimed in Claim 1,
**characterized in that** the colloidal SiO₂ particles having an average size of 50 nm ≤ d ≤ 150 nm, corresponding to a specific surface of 25 m²/g ≤ Aₛ ≤ 70 m²/g, have a polydisperse particle-size distribution.

5. A display screen having a phosphor coating as claimed in Claim 1,
**characterized in that** the coating contains a color-filter pigment.

6. A display screen having a phosphor coating as claimed in Claim 1,
**characterized in that** the phosphor preparation contains a color-filter pigment in a separate coating.

7. A phosphor preparation of a phosphor provided with a coating comprising one or more oxygen compounds of the elements zinc, aluminum, magnesium, calcium and barium as well as colloidal SiO₂ particles, **characterized in that** the colloidal SiO₂ particles are composed of SiO₂ particles having an average size of 4 nm ≤ d ≤ 30 nm,
corresponding to a specific surface of 100 m²/g ≤ Aₛ ≤ 550 m²/g, and SiO₂ particles having an average size of 50 nm ≤ d ≤ 150 nm, corresponding to a specific surface of 25 m²/g ≤ Aₛ ≤ 70 m²/g, and the molar ratio of the overall quantity of colloidal SiO₂ particles to the overall quantity of the oxygen compounds of the elements Zn, Al, Mg, Ca and Ba ranges from 5:1 to 30:1 in the coating.

8. A method of manufacturing a phosphor preparation from a phosphor provided with a coating comprising one or more oxygen compounds of the elements zinc, aluminum, magnesium, calcium and barium as well as colloidal SiO₂ particles, with diluted ammonia being added to a phosphor suspension to obtain a pH-value ≥ 9.2, and said suspension being ground with colloidal SiO₂ particles having a size of 4 nm ≤ d ≤ 30 nm, a colloidal solution of colloidal SiO₂ particles having an average size of 50 nm ≤ d ≤ 150 nm, an aqueous ammonium-salt solution, an aqueous solution of a water-soluble salt of one of the elements of the group formed by zinc, aluminum, magnesium, calcium and barium being successively added to the phosphor suspension, resulting in a molar ration of the overall quantity of colloidal SiO₂ particles to the overall quantity of the oxygen compounds of the elements Zn, Al, Mg, Ca and Ba from 5:1 tot 30:1 in the coating and, subsequently, the pH-value of the phosphor suspension being reduced to a value of pH ≤ 7 by means of the diluted acid, and, next, the pH-value of the phosphor suspension being increased to pH ≥ 8.

## Revendications

1. Ecran présentant une couche fluorescente, qui contient une préparation fluorescente constituée d'une substance fluorescente avec une couche de revêtement comprenant un ou plusieurs composés oxygénés des éléments zinc, aluminium, magnésium, calcium et baryum ainsi que des particules colloïdales de SiO₂, **caractérisé en ce que** les particules colloïdales de SiO₂ sont constituées de particules de SiO₂ présentant une taille moyenne de particules de 4 nm ≤ d ≤ 30 nm, correspondant à une surface spécifique de 100 m²/g ≤ Aₛ ≤ 550 m²/g, et des particules de SiO₂ présentant une taille moyenne de particules de 50 nm ≤ d ≤ 150 nm, correspondant à une surface spécifique de 25 m²/g ≤ Aₛ ≤ 70 m²/g, et la couche de revêtement présente un rapport molaire quantité totale de particules colloïdales de SiO₂ à quantité totale des composés oxygénés des éléments Zn, Al, Mg, Ca et Ba de 5:1 à 30:1.

2. Ecran présentant une couche fluorescente selon la revendication 1, **caractérisé en ce que** la couche de revêtement contient 0,01% en poids à 0,07% en poids, par rapport à la substance fluorescente, de particules colloïdales de SiO₂ présentant une taille moyenne de particules de 4 nm ≤ d ≤ 30 nm, et 0,10% en poids à 1,5% en poids, par rapport à la substance fluorescente, de particules colloïdales de SiO₂ présentant une taille moyenne de particules de 50 nm ≤ d ≤ 150 nm.

3. Ecran présentant une couche fluorescente selon la revendication 1, **caractérisée en ce que** le composé oxygéné est un composé oxygéné de zinc.

4. Ecran présentant une couche fluorescente selon la revendication 1, **caractérisé en ce que** les particules colloïdales de SiO₂ présentant une taille moyenne des particules de 50 nm ≤ d ≤ 150 nm, correspondant à une surface spécifique de 25 m²/g ≤ Aₛ ≤ 70 m²/g, présentent une distribution polydispersée des tailles de particules.

5. Ecran présentant une couche fluorescente selon la revendication 1, **caractérisé en ce que** la couche de revêtement contient un pigment filtre couleur.

6. Ecran présentant une couche fluorescente selon la revendication 1, **caractérisé en ce que** la préparation fluorescente contient un pigment filtre couleur dans un revêtement séparé.

7. Préparation fluorescente constituée d'une substance fluorescente avec une couche de revêtement comprenant un ou plusieurs composés oxygénés des éléments zinc, aluminium, magnésium, calcium et baryum ainsi que des particules colloïdales de SiO₂, **caractérisée en ce que** les particules colloïdales de SiO₂ sont composées de particules présentant une taille moyenne des particules de 4 nm ≤ d ≤ 30 nm, correspondant à une surface spécifique de 100 m²/g ≤ Aₛ ≤ 550 m²/g, et des particules de SiO₂ présentant une taille moyenne des particules de 50 nm ≤ d ≤ 150 nm, correspondant à une surface spécifique de 25 m²/g ≤ Aₛ ≤ 70 m²/g, et la couche de revêtement présente un rapport molaire quantité totale de particules colloïdales de SiO₂ à quantité totale des composés oxygénés des éléments Zn, Al, Mg, Ca et Ba de 5:1 à 30:1.

8. Procédé de préparation d'une préparation fluorescente constituée d'une substance fluorescente avec un revêtement comprenant un ou plusieurs composés oxygénés des éléments zinc, aluminium, magnésium, calcium et baryum ainsi que des particules colloïdales de SiO₂, une suspension de substance fluorescente étant réglée à un pH ≥ 9,2 avec de l'ammoniaque diluée et broyée avec des particules colloïdales de SiO₂ présentant une taille des particules de 4 nm ≤ d ≤ 30 nm, une solution colloïdale de particules colloïdales de SiO₂ présentant une taille moyenne des particules de 50 nm ≤ d ≤ 150 nm étant ajoutée à la suspension de substance fluorescente, une solution aqueuse de sel d'ammonium étant ajoutée, une solution aqueuse d'un sel soluble dans l'eau d'un des éléments du groupe zinc, aluminium, magnésium, calcium et baryum étant ajoutée à la suspension de substance fluorescente de telle manière que la couche de revêtement présente un rapport molaire quantité totale de particules colloïdales de SiO₂ à quantité totale de composés oxygénés des éléments Zn, Al, Mg, Ca et Ba de 5:1 à 30:1, le pH de la suspension de substance fluorescente étant diminué à pH ≤ 7 au moyen d'un acide dilué et le pH de la suspension de substance fluorescente étant relevé à pH ≥ 8.
